# EUROPEAN PATENT SPECIFICATION

(11) **EP 1 315 133 B1**
(45) Date of publication and mention of the grant of the patent: **17.06.2009**
(21) Application number: 01127840.5
(22) Date of filing: 22.11.2001
(51) Int. Cl.: H04L 12/28, H04L 12/56

(54) **Mobile transmitting device for transmitting messages in a beamed way**
Mobile Sendeeinrichtung zur richtungsabhängigen Nachrichtenübertragung
Dispositif mobile émetteur pour la transmission directionnelle de messages

(43) Date of publication of application: 28.05.2003
(73) Proprietor: Sony Deutschland GmbH, 10785 Berlin (DE)
(72) Inventor: Hamdan, Amen, Sony International (Europe) GmbH, 70327 Stuttgart (DE)
(74) Representative: Körber, Martin Hans

(56) References cited:
- EP-A- 0 798 651
- EP-A- 0 919 968
- FR-A- 2 615 957
- US-A- 5 825 045

## Description

The present invention relates to a mobile transmitting device for transmitting messages to a receiving device on the basis of a wireless communication system.

The transmission and the receipt of personal or business messages using mobile or portable devices becomes more and more popular. The success of the SMS (Short Message Service) system within the GSM (Global Standard for Mobile Communication) system in Germany and Europe shows that there is a high demand for systems that allow to transmit messages of any kind to a recipient. Compared to a voice communication using a cell phone or leaving voice messages on a mailbox, the communication with text or graphical messages is much quicker and easier to handle, since a communication channel between the transmitter and the receiver does not have to be established.

However, the disadvantage of all known systems which are described below in more detail, is that in order to send a message to a certain person or receiver, the physical or virtual address of the receiving device has to be known. Thus, a message can only be sent if the address information is available prior to the message transmission.

One example is the above mentioned SMS system which allows the transmission of messages consisting of up to 160 characters between mobile phones within the GSM system. Although, the SMS system is similar to paging, SMS messages do not require the receiving mobile phone to be active and within transmission range. A transmitted SMS message will be held in a SMS server for a number of days until the receiving mobile phone becomes active and within receiving range, whereafter the receiving phone displays or outputs an information to the user that a new SMS message had been received. SMS messages are transmitted within the same cell of the cellular communication system or to anyone with roaming service capability. Also, SMS messages can be sent to digital phones from a website equipped with a PC link or from one digital phone to another. However, sending SMS messages requires the knowledge of the receiver address. Further, a connection to a service provider is necessary. Another possibility to exchange messages is the instant messaging system, which applies to wired computer networks (Internet or Intranet). In the instant messaging system, a user can see if a preselected friend or colleague is connected to the Internet or Intranet and, if he or she is, exchange messages. Instant messaging differs from normal e-mail in the immediacy of the message exchange and thus makes a continued exchange simpler and quicker than sending e-mails back and forth. However, in order to be able to exchange instant messages, both users must subscribe to the same service and must be online in, i.e. connected to the network, at the same time. Further, the intended receiver must be willing to accept instant messages and has to set his or her software respectively. However, the instant messaging system also requires the knowledge of the address of the intended receiver. Further, the current systems always require a steady connection to the Internet or the Intranet in order to use the instant message exchange.

A further known possibility of transmitting messages is geocasting. Geocasting is a specialised multicasting technique for mobile systems, whereby messages are mulitcast to mobile nodes within a given region. In other words, geocasting is a mechanism to mulitcast messages to network nodes whose physical locations lie within a given geographic area. Other than the physical locations, secondary attributes can be sought depending on the application. For instance, a geocast session with the mobile nodes that have the attribute "medical doctor" maybe desired within a given radius of an accident site. The geocast area, called the "geocast zone" can be an arbitrary area specified by the transmitter/sender, or an area whose pre-specified boundaries are well-known to all users. The geocasting concept can be deployed in all networks. However, it is most interesting to study geocasting problems in the case of mobile networks, where the group of recipients of a geocast message within the same geocast zone is subject to continuous change. The structure of the instantaneous geocast group in itself is a problems whose complexity is increased in the case where the sender specifies the boundaries of the geocast zone. The architecture of the mobile network has a defining effect on the geocasting mechanism. Geocasting in cellular mobile networks, i.e. networks with infrastructure having fixed network access points, presents a different set of problems than geocasting in ad-hoc mobile networks, where there is no network infrastucture. Even though the message transmission by geocasting is very powerful, the targets still have to be defined by giving an address or at least an area within which the message is multicasted. The disadvantage is, that the receiver is not individualised without ambiguities since everybody in the target area receives the message.

An ad-hoc or "spontaneous" network is a local area network or another small network, particularly with wireless or temporary plug-in connections. The difference between standard wireless networks and ad-hoc networks is that ad-hoc network devices are part of the network only for the duration of a communication session or, in the case of mobile or portable devices, while the devices are in close proximity to the rest of the network. However, even in an ad-hoc network, the recipient of a message has to be specified by a unique address or a unique device identifier.

Further, there is the possibility of using infrared communication links to exchange messages between devices. Hereby, messages can be exchanged between two mobile devices or a mobile device and a non-mobile device by pointing the transmitting device to the receiving device. However, infrared data communication is limited to a very short range and both devices, i.e. the transmitting device as well as the receiving device have to be pointed directly to each other in order to enable an infrared message transmission. Further, infrared data transmission requires a line of sight between receiver and transmitter and is very sensitive to disturbing influences like fog, sunlight, etc.

CyberCode is a visual tagging system based on a 2D-barcode technology and provides several features not provided by other tagging systems. CyberCode tags can be recognised by the low-cost CMOS or CCD cameras found in more and more mobile devices, and it can also be used to determine the 3D position of the tagged object as well as its ID number. Unfortunately it can only be used for tagging objects that have a visible address attached. Furthermore, the system is very bulky since it requires comparatively high computing power and a camera, so that both systems together are very power-consuming and provide only limited usage.

Lovegettys are small devices into which users can enter a very limited personal profile. Whenever another person with a Lovegetty device and a similar profile passes by, the Lovegetty starts an alarm. The typical range for these devices is about 5 metres. More extended versions of these devices can detect other devices with similar profiles in up to 100 metres distance. However, Lovegetty devices do not send or receive messages.

From the European patent applications EP 0 798 651 A2 and EP 0 919 968 A1 mobile transmitting devices according to the preamble of claim 1 of the present invention are known.

The grafted patent US 5 825 945 discloses an information transducing system including a data tag for digitally storing data and a tag reader for selectively activating data tags. The tag reader may be operated so as to transmit a unidirectional beam of radiant energy such that it impinges on a data tag to be read. The radiant energy radiating from the tag reader activates the data tag causing the data tag to transmit its digitally stored data via radiant energy to the tag reader.

The object of the present invention is therefore to provide a mobile transmitting device for transmitting messages to a receiving device on the basis of a wireless communication system which is light-weight, simple to realise and allows to transmit messages to a receiver in a very intuitive way without requiring the knowledge of an address or identification number of the receiving device.

The above object is achieved by a mobile transmitting device for transmitting messages to a receiving device on the basis of a wireless communication system according to claim 1.

The transmitting device according to the present invention is adapted to be pointed to the receiving device in order to transmit a message and comprises providing means for providing a message to be transmitted, control means for causing the transmission of a message provided by said providing means upon receipt of a transmit signal transmitting means for transmitting the message to said receiving device in the wireless communication system on the basis of the direction in which the transmitting device is pointed, a direction determination means for determining the direction into which the transmitting device is pointed, and a location determination means for determining the location of the transmitting device, whereby the determined direction and location together with said message are transmitted by the transmitting device to a server device and said message is to be further transmitted by said server device to the receiving device to which the transmitting device had been pointed.

Thus, by simply pointing the mobile transmitting device according to the present invention towards a receiving device, a message can be transmitted simply on the basis of the direction in which the transmitting device is pointed. Thus, the present invention enables a very simple and intuitive way of transmitting messages without even knowing a receivers address or identification. A particular advantage of the present invention is that the transmitting functionality can be easily implemented into existing mobile communication devices, such as cell phones, personal digital assistants and the like. The message transmission functionality according to the present invention is particularly advantageous since messages can be transmitted quickly and easily without even knowing the receivers name or address. According to the present invention, a message is not directly transmitted from the transmitting device to the receiving device but via an intermediate server device. However, the direction and the location are determined by the direction determination means and the location determination means so that a server device knows to which receiving device the message has to be transmitted. The direction determination means and the location determination means may be embodied in a single means. E.g., the location determination means may be a GPS (Global Positioning System) receiver and the direction determination means may be a compass.

The mobile transmitting device may further comprise a receiving means for receiving messages via the wireless communication system, said receiving means comprising a multidirectional antenna for receiving messages from different directions. Thus, the mobile transmitting device can transmit and receive messages in the same wireless communication system. However, in order to ensure that the device can always receive messages transmitted from a transmitting device in a beamed way, the receiving means should comprise a multidirectional or even omnidirectional antenna so that messages can always be received from different directions without the need to directly point the receiving device to a transmitting device.

Further advantageously, the control means, after receipt of a message from a server device via the wireless communication system, causes the transmission of an acknowledgement message to the transmitting device via the server device in the wireless communication system. Hereby, the receiving means and the transmitting means advantageously use the same antenna, such as the multidirectional antenna or even an omnidirectional antenna for transmitting and receiving messages to and from the server device. Hereby, the communication system may e.g. be a cellular communication system in which the server device is implemented into a base station of the communication system.

Advantageously, the mobile transmitting device comprises an input means for inputting messages to be transmitted to the receiving device. E.g., the input means may be a keyboard enabling a user to create and write individual messages to be transmitted to a receiver. Alternatively or additionally, the input means may be an interface through which a pre-written or pre-defined message can be received, e.g. an infrared interface or the like.

Further advantageously, the mobile transmitting device comprises a memory means for storing messages to be transmitted to a receiving device. Hereby, pre-written or already sent messages can be stored and used again or be used as a basis for new messages.

Thus, the mobile transmitting device according to the present invention enables a very intuitive and simple way of transmitting messages to receiving devices without the necessity of obtaining an address or an identification number of the receiving device before transmitting the message. Simply by pointing the transmitting device towards a receiving device the message can be transmitted in a simple and effective way. A particular advantage of the present invention is that the transmitting and receiving functionality can be easily implemented into existing devices, such as mobile communication devices like cell phones, personal digital assistants and so on.

The present invention is explained in more detail in the following description in relation to the enclosed drawings, in which
Fig. 1 shows a simple application scenario for explaining the working principle of the present invention,
Fig. 2 shows a first example of a mobile transmitting device and a corresponding simple receiving device,
Fig. 3 shows a second example of a mobile transmitting device and a corresponding receiving device,
Fig. 4 shows an embodiment of a mobile transmitting device according to the present invention as well as a corresponding server device and a receiving device,
Fig. 5 shows a simple practical example of a transmitting device according to the present invention,
Fig. 6 shows another example of a mobile transmitting device embodied as a mobile cell phone,
Fig. 7 shows a packet format of a message to be transmitted according to the present invention,
Fig. 8 shows a packet format of an acknowledge message according to the present invention,
Fig. 9 shows a schematic flow chart for the transmission of messages according to the present invention, and
Fig. 10 shows a schematic flow chart for the transmission of acknowledgement messages according to the present invention.

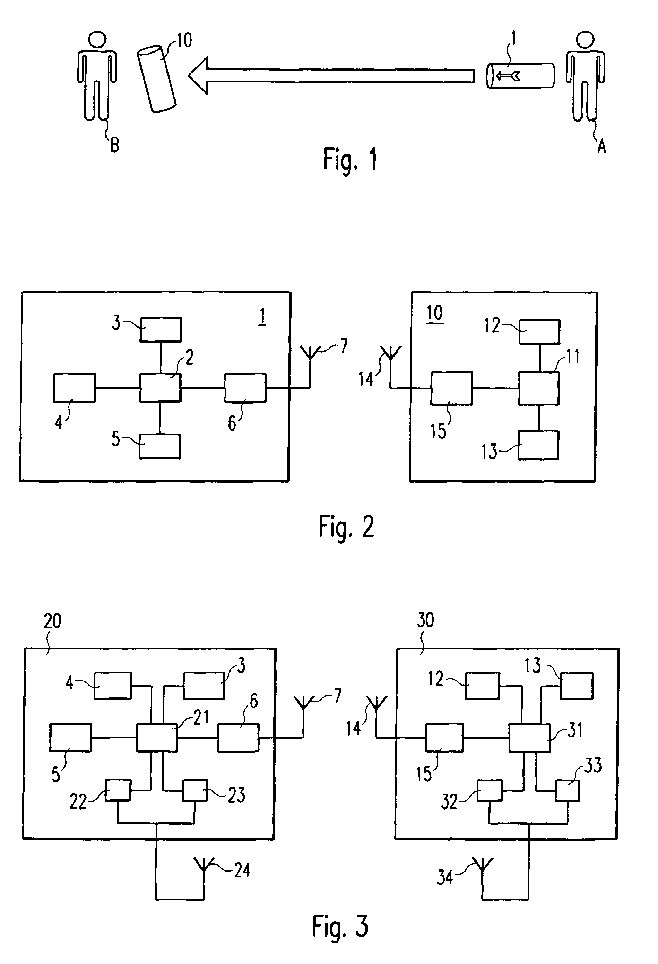

Fig. 1 shows a schematic example of the working principle of the transmission of messages according to the present invention. As shown in Fig. 1, a user A carrying a mobile transmitting device 1 intends to transmit a message to another person B simply points the transmitting device towards the other person, i.e. a receiving device 10 carried by the person B. After selection or inputting of the message, user A presses a send button or the like in order to cause the transmission of the message to the person B. The message is then transmitted from the transmitting device 1 to the receiving device 10 on the basis of the pointing direction.

Therefore, the message transmission system of the present invention requires two devices, namely a transmitting device 1 and a receiving device 10 as in the example shown in Fig. 1. Hereby, the transmitting device 1 for transmitting the message to a receiving device 10 is a mobile or portable device which can be easily carried by a user A. The transmitting device can hereby be a device which is only serving the message transmission functionality according to the present invention, may further include receiving possibilities for receiving messages, or may even be implemented into another mobile communication device, such as a mobile phone, a personal digital assistant or the like.

The wireless communication system, in which the messages according to the present invention are transmitted, can be any wireless communication system chosen and depending on the wanted application, transmission power, transmission range and the like. E.g., the wireless communication system for the transmission of messages can base on the GSM, UMTS system or any other suitable wireless cellular communication system, may base on another electromagnetic transmission system in the MHz or the GHz range.

The messages to be transmitted by the mobile transmitting device according to the present invention can be of any digitally processable format including simple text messages, images, graphic messages, voice messages, and so on. In the receiving device, message spamming filter mechanisms can be used in order to avoid the reception of unwanted messages. E.g. such a filter could filter out unwanted message formats or messages from unwanted persons and so on. The last possibility of course implies that each mobile transmitting device according to the present invention has a unique device identification that is transmitted with each message and that allows a receiver to check and identify where the message is coming from.

It has to be noted that Fig. 1 implies that the message is directly sent from the mobile transmitting device 1 to the receiving device 10. This is the case in certain examples of the transmitting device 1 as will be explained in more detail in relation to Figs. 2 and 3. However, in the mobile transmitting device according to the present invention, the message is not directly transmitted from the transmitting device to a receiving device, but via an intermediate server device or base station. However, in the examples of the transmitting device and in the transmitting device according to the present invention a message will be transmitted on the basis of the direction into which the transmitting device is pointed. Thus, the pointing direction of the transmitting device determines the transmission direction and thus the receiver selected by the user intending to transmit a message. The receiver device to which the message is transmitted, does not need to be pointed to the transmitter, since often the receiver may not know that someone intends to transmit a message. Thus, the receiving device should have a corresponding receiving means enabling the reception of messages from different directions. Further, the receiver device may be a mobile or portable device such as the transmitting device. E.g., the transmitting device for the transmission of a message and the receiving device for the reception of a message could be the same kind of device, i.e. a communication device which enables the transmission of a message on the basis of the direction in which the transmitting device is pointed and the reception of messages from different directions from other devices. Alternatively, the receiving device may be a standing device standing in the display of a store or shop or the like.

In the following, several application scenarios for the message transmission system of the present invention are described. E.g., from far a user sees a bus he or she wants to take. The user notices that the driver is about to close the doors and to leave the bus station. Then, by simply using the mobile transmitting device according to the present invention, a corresponding "Please wait a moment" message could be transmitted to the bus in which a corresponding receiving device is installed so that the bus driver learns that another passenger is coming.

Another application scenario is a user walking through the streets seeing a friend or an acquaintance in a distance. However, the distance is too far to shout. Simply by using a mobile transmitting device according to the present invention, a message could be transmitted to the other person with the invitation to have a coffee together or the like.

A different application scenario is a user walking by a store or shop seeing a product he or she is interested in in a display. However, the shop or store is closed, particularly if the user is in Germany where the shops and stores usually close early. Here, by simply pointing the mobile transmitting device into the display or onto the product, the user could send a message to a corresponding receiving device in the display of the store asking for more information about the product and/or personal information about the user with his telephone number or the like and the request to be contacted by the store. Then, the product e.g. could be reserved automatically for the user and/or the user could receive more information about the product.

Another application scenario is that a user listens to the radio or watches TV and hears a song or sees a movie he or she likes. Here, by simply pointing the mobile transmitting device to the radio set or the TV set and transmitting a corresponding message, the user could receive more information about the song and/or the movie that is currently playing. Hereby, the radio set or the TV set should comprise a corresponding receiving device for receiving the message and a transmitting device for transmitting the message to the radio station or the TV station which then supplies the requested information back through the radio set or the TV set or directly back to the user, e.g. via SMS or the like.

Another possibility is a user sitting on a balcony of his or her apartment seeing an interesting person on a balcony nearby. Here, by simply pointing the mobile transmitting device towards each other, a first contact could be established and a small conversation could be conducted.

In another application, large display screens or advertisement billboards could be equipped with receiving devices, so that users wanting to know more about the display products could point their mobile transmitting devices towards the billboard and request further additional information which could be either transmitted back directly to the transmitting device or via a mobile communication system such as the GSM system or the like. Of course, many other application scenarios are possible.

Figs. 2 and 3 show different examples for a message transmitting system.

Fig. 2 schematically shows a mobile transmitting device 1 for transmitting messages to a receiving device 10 on the basis of a wireless communication system. Hereby, the mobile transmitting device 1 is a very simple and light weight device comprising the means and the functionality for transmitting messages. The transmitting device 1 hereby comprises means for providing a message, such as an input means 4, such as a keyboard or a keypad connected to control means 2 for controlling the provision, processing and transmitting of the messages. Further, a memory means 3 is provided for storing necessary software programs and input or prestored messages. Further, a display means 5 is provided for displaying input or prestored messages to a user.

If a user decides to transmit a message, he or she points to a mobile transmitting device 1 towards a receiving device, such as the receiving device 10 and pushes a corresponding "send"-button of the input means 4. Then, the control means 2 receives a corresponding transmit signal and causes a transmitting means 6 connected to a beam antenna 7 to transmit the message in the pointing direction in a beamed way. Thus, the message is directly transmitted through the beam antenna 7 to a multi-directional or omni-directional receiving antenna 14 of the receiving device 10. The received signals are further processed by receiving means 15 of the receiving device 10, which is controlled by a control means 11. Further, the receiving device 10 comprises a memory means 12 for storing received messages and necessary software programs and the display means 13 for displaying received messages for the user holding or processing the receiving device 10. In case that the transmitted message is an audio message, audio input means or output means to be provided in the transmitting device 1 and the receiving device 10 enabling the input and recording as well as the output of an audio message.

It is to be noted that Fig. 1 shows a very simple and basic example of a mobile transmitting device 1 and receiving device 10. However, further elements or functions can be realised in the transmitting device 1 and the receiving device 10. For example, the receiving device 1 could comprise all means and functions shown and described in relation to the receiving device 10, so that the transmitting device 1 is also adapted to receive messages over the wireless communication system. The same is true for the receiving device 10, which could also comprise all means and functions shown and described in relation to the transmitting device 1, so that the receiving device 10 is also adapted to transmit messages in the wireless communication system. In this context it has to be noted that very simple means enabling the input of messages of different formats can be provided in the transmitting device 1. Correspondingly, various kinds of output means could be provided in the receiving device 10 enabling the output of messages of different formats. Further, the display means 5 of the transmitting device 1 may be omitted in case that only predefined and prestored messages are used. In this case, a message to be transmitted does not necessarily need to be displayed in order to be checked by user. For example, a specific selection key could be provided for each prestored message, so that the user can clearly differentiate between the different messages. In case that the display means 5 is provided in the transmitting device 1, predefined messages can be easily displayed in a sequence and scrolled through using a scrolling means, whereby pressing of a selection key could initiate selection and transmission of the selected message. Then, the successful transmission could be indicated on the display means as a feedback for the user. In case that no display means is provided in the transmitting means 1, a small LED display or the like could be used to indicate a successful transmission of a message for the user.

The elements and functionalities explained above in relation to the transmitting device 1 and the receiving device 10 and the further options explained above could be implemented into existing devices, such as mobile phones, mobile personal digital assistants and the like.

Fig. 3 shows a more advanced example of a mobile transmitting device 20 and the corresponding receiving device 30. Hereby, the mobile transmitting device 20 shown in Fig. 3 comprises all elements and functionalities described and explained in relation to the mobile transmitting device 1 of Fig. 2. Also, the receiving device 30 of Fig. 3 comprises all means and functions explained above in relation to the receiving device 10 of Fig. 2. Additionally, the transmitting device 20 comprises transmitting means 22 and receiving means 23 connected to a common antenna 24 which enable the receipt of an acknowledgement message from the receiving device 30 after the successful transmission of the message from the transmitting device 20 via the beam antenna 7 to the receiving antenna 14 of the receiving device 30. Correspondingly, the receiving device 30, in addition to the functions of the receiving device 10, comprises a transmitting means 32 and a receiving means 33 connected to a common antenna 34 for the transmission of acknowledgement messages back to the transmitting device 20 after the receipt of a message. Hereby, the acknowledgement message is transmitted in another wireless communication system 5 from the one in which the message is transmitted between the beam antenna 7 and a receiving antenna 14. For example, the message transmission between the beam antenna 7 and the receiving antenna 14 may be based on an infrared or laser transmission, whereas the transmission of the acknowledgement message may be performed on the basis of the GSM or UMTS system. The example shown in Fig. 3, the transmitting device 20 comprises a transmitting means 22 as well as a receiving means 23 and the receiving device 30 comprises transmitting means 32 as well as a receiving means 33, so that not only the transmission of an acknowledgement message is enabled, but also the communication in the respective wireless communication system is possible. Thus, for example, the sample shown in Fig. 3 could apply to the embodiment in which the message transmission and receiving functionality according to the invention is implemented into wireless cell phones or personal digital assistance. Additionally, the control means 21 controlling the operation of the transmitting device 20 comprises all necessary additional functionality beside the functionalities of control means 2 of the transmitting device 1 shown in Fig. 2. Similarly, the control means 31 of the receiving device 30 comprises all necessary additional functionalities necessary for the operation in addition to the functionalities of the control means 11 of the receiving device 10.

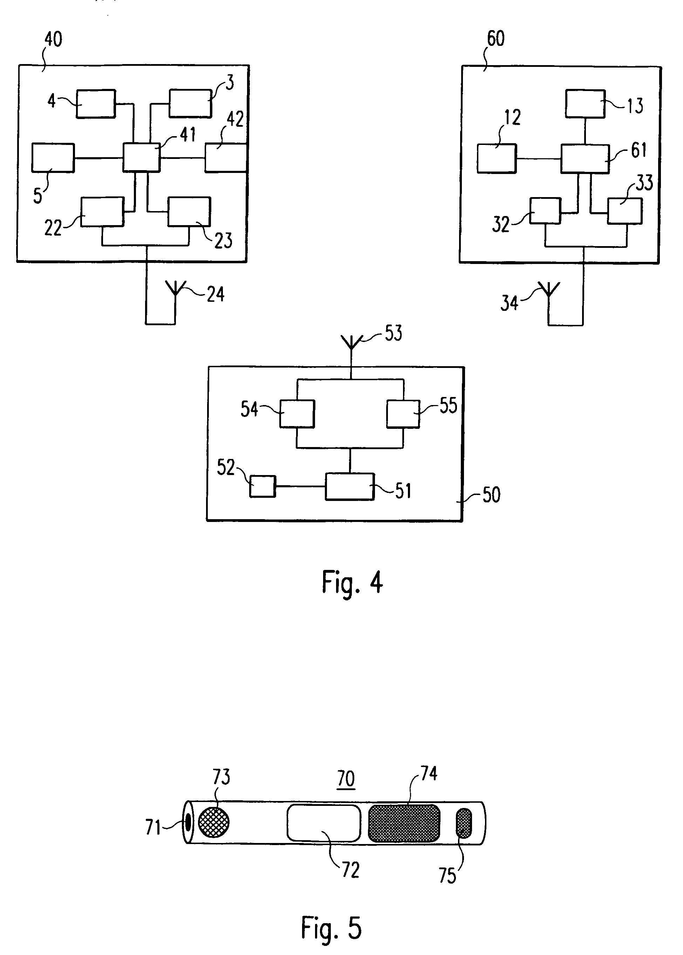

Fig. 4 shows the, so-called centralised approach, to the message transmission and reception according to the present invention. In this case, a message is not directly transmitted from a transmitting device 40 to a receiving device 60, but via an intermediate server device 50. Thus, in the embodiment of the present invention shown in Fig. 4, the transmitting device 40 and the receiving device 60 comprise all elements and functionalities of the transmitting device 1 and receiving device 10 shown in and explained in relation to Fig. 2 relating to the input, provision and output of messages. However, the transmission and reception of the message is handled in a different way. Here to for the transmitting device 40 comprises a direction determination and location determination means 42 which determines the direction into which the transmitting device 40 is pointed by a user if he or she wants to transmit a message and to determine the actual position of the user holding the transmitting device 40. Thus, if the user points the transmitting device 40 towards the receiving device 60, the direction determination and location determination 42, after receiving a corresponding instruction caused by a user input, determines the pointing direction and the actual location of the transmitting device 40. This information is forwarded together with a message to be transmitted under the control of the control means 41 of the transmitting device 40 to the server device 50 via the transmitting means 22 and the antenna 24 described above in relation to the example shown in Fig. 3. Thus, the message together with the direction information and the location information is transmitted via a wireless communication system to the intermediate server device 50, which can for example be a base station or the like. This server device 50 comprises an antenna 53 for receiving and transmitting signals in a wireless communication system, a transmitting means 54 and receiving means 55 connected to a control means 51 controlling the operation of the server device 50. Further, a memory means 52 connected to the control means 51 is provided for storing received and forwarded messages and software programs necessary for the operation of the server device 50. After receipt of a corresponding message together with a direction information and a location information from the transmitting device 40, the control means 51 processes to receive information and determines the receiving device 60 to which the user of the transmitting device 40 wants to transmit the message. If the server device 50 is for example a base station of a wireless communication system, such as the GSM or UMTS system, the control means 51 identifies the receiving device 60 by its identification number and the position information and is thus able to transmit the message. The receiving device 60 comprises transmitting means 32, receiving means 33 and a common manner 34 enabling the reception and transmission of messages in the wireless communication system as described in relation to the transmitting device 30 shown in Fig. 3. The transmitting device 40 of the example shown in Fig. 4 may for example be a normal mobile or cell phone or personal digital assistant additionally comprising the direction determination and location determination means 42 enabling the message transmission functionality of the present invention. Alternatively, the transmitting device 40 can combine features shown and explained in relation to Fig. 2 and 3, i.e. transmitting means 6 and beam antenna 7 with the direction determination and location determination means 42, so that for example, for short range message transmission to beam antenna 7 can be used and for long range message transmission the message transmission via the intermediate server device 50 which is shown in Fig. 4 can be used.

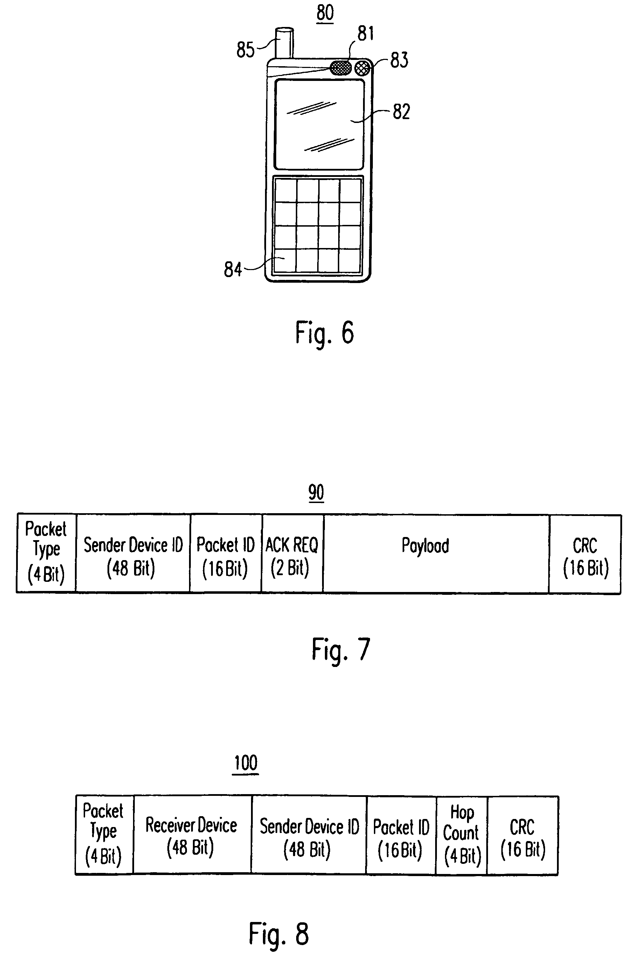

Fig. 5 and 6 show different practical embodiments of a message transmitting device according to the present invention. Fig. 5 shows a mobile transmitting device 70 in a very simple embodiment comprising a beam antenna 71 corresponding to the beam antenna 7 shown and explained in relation to Fig. 2 and 3, a display means 20, a direction determination and location determination means 73 corresponding to the direction determination and location determination means 42 explained in relation to Fig. 4, an input means 74 as for example an infrared interface for receiving predefined messages to be transmitted to a receiving device and a message sent key 75. The mobile transmitting device 70 has a very simple pen like shape and is therefore very small and light weight. Its basic functionalities may correspond to the once shown and explained in relation to the transmitting device 1 shown in Fig. 2, whereby the direction determination and location determination means 73 is provided as additional functionality for determining the pointing direction and location of the transmitting device 70. In this case, the message can either be directly transmitted via the beam antenna 71 to a receiving device, such as the receiving device 10 shown in Fig. 2, or, for example for a longer transmission ranges, the message together with the direction and position information can be transmitted via the beam antenna 71 to a server device, such as a server device 51 shown in Fig. 4, which then forwards the message to a receiving device on the basis of the received location and direction information. Thus, all the different possibilities and functionalities shown in and explained in relation to Fig. 2, 3 and 4 can be combined and varied depending on the specific application. The message will be transmitted from the transmitting device to the receiving device on the basis of the direction in which the transmitting device is pointed.

Fig. 6 shows a further practical example of a mobile transmitting device 80 according to the present invention. In the shown case, the mobile transmitting device 80 is a mobile cell phone comprising all the elements and functionalities of a usual cell phone, such as a display 82, a keypad 84 and a transmitting and receiving antenna 85. Further, the beam antenna 81 corresponding to the beam antenna 7 shown in and explained in relation to Fig. 2 and 3 is provided, as well as a direction determination and location determination means 82 corresponding to direction determination and location determination means 42 shown in and explained in relation to Fig. 4.

Fig. 7 shows an example of a message format 90 for a message to be transmitted from a transmitting device according to the present invention to a receiving device, as for example explained in relation to Fig. 4. Hereby, it is essential that the format of the message packets 90 have a very simple design in structure and are easy to use since in a very simple embodiment of the mobile transmitting device according to the present invention, the processing power of the control means should be very small and limited. Thus, for example, the format of the message packet 90 only comprises the package type, for example 4 bit, a sender device identification, for example 48 bit, a packet identification, for example 16 bit, an information if an acknowledgement is expected, for example 2 bit, the payload comprising the actual message, and a error check and correction possibility for example in the form of a cyclic redundancy checksum, for example 16 bit.

The package type specifies the type of packet. For example, the default sent message has the packet type 5, which equals the binary numbers 0101. The default response is the receive acknowledgement message, an example of which is shown in Fig. 8, having the type 10, which equals the binary number 1010. The sender device identification is a unique device identifying the respective mobile transmitting device transmitting the message. The packet identification is used to distinguish different packets from the same transmitting device and are unique within a certain time period. For example, the same packet identification is not used twice within a certain period. The acknowledgement request bits indicate if an acknowledgement message is requested. Hereby, 4 bits are used to allow different types of acknowledgement messages to be specified. Hereby, a user has the possibility to specify different possibilities, for example, if he wants any acknowledgement message if the acknowledgement message is to be sent via a different wireless communication system, for example SMS, or via direct device interaction. As stated-above, the payload is the actual message content of the packet 90. The cyclic redundancy checksum is simple 16 bit standard checksum used to verify the integrity of the complete message packet.

Fig. 8 shows an example of a packet format 100 of an acknowledgement message. As stated-above, an acknowledgement message is only transmitted from a receiving device if a feedback channel to the transmitting device is available and acknowledgement is desired. Proposed packet format 100 comprises a specification of the packet type, for example 4 bits, a receiver device identification, for example 48 bits, a sender device identification, for example 48 bits, a packet identification, for example 16 bits, a hop count, for example 4 bits and the cyclic redundancy checksum, for example 16 bit. Hereby, the package type specifies different packets from the same receiving device and are unique within a certain time period, for example the same packet and identification is not used twice within a certain time period. The receiver device identification is a unique identification of the receiving device that has received a message and is transmitting the acknowledgement message. The sender device identification specifies the transmitting device that had transmitted the message and that is the receiver of the acknowledgement message. The packet identification specifies the message packet which is to be acknowledged. This value in combination with the sender device and identification is sufficient to unequivocally specify a message packet. The hop count is used if the acknowledgement message is passed to more than just one note, as for example, a sender device 50 as shown in Fig. 4, before the acknowledgement message finally reaches the receiver. The cyclic redundancy checksum is used to ensure that the acknowledgement packet is received without faults.

The transferred messages in the payload can be of any desired format. For inter-operability purposed it is advantageous to use standardised multi-medial message formats.

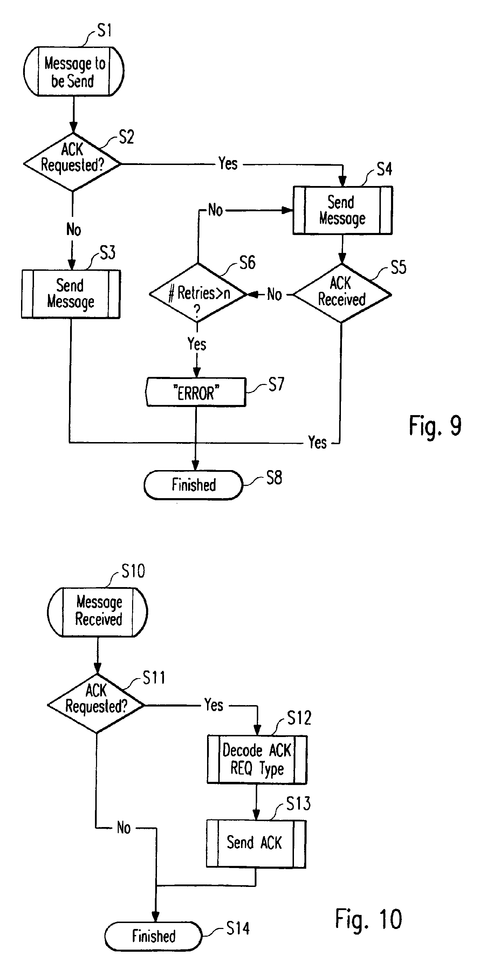

Fig. 9 shows a schematic flow chart as an example for message transmission protocol for transmitting messages according to the present invention. In a first step S1, a message to be transmitted is provided. Providing the message can either be implemented by inputting the message via a keypad or the like or by selecting the predefined message from a memory. Thereafter, a user can choose an input into his or her transmitting device according to the present invention, if an acknowledgement request is necessary, in a second step S2. If an acknowledgement message is not requested, the message is transmitted in a third step S3 upon input of a corresponding transmit instruction by a user and the message transmission is finished in a step S8. If an acknowledgement message is requested, and the user inputs a corresponding instruction into his or her transmitting device, the message is sent in a step S4 upon the input of a corresponding transmit instruction by the user, whereby a transmitted message packet comprises an indication that an acknowledgement message is requested. In a further step S5, the transmitting device checks if the requested acknowledgement message has been received. If the acknowledgement message has been received, the message transmission is finished in a step S8. If no acknowledgement message has been received the procedure goes from step S5 to a further step S6, in which the number of times how often a message has been resent is calculated and the number of retries is compared to predetermined threshold. If the number of retries is below the predetermined threshold, as for example an integer number n, the procedure goes back to a step S4 and the message is sent again. If in step S6 it is decided that the number of retries is larger than the predetermined threshold, an "Error" message is output in a step S7 to user, for example via a display means, where after the procedure finishes in step S8.

Fig. 10 shows a schematic example of a protocol performed in a receiving device. In a first step S10, the receiving device receives the message from a transmitting device according to the present invention. In the further step S11 it is checked if an acknowledgement message is requested. If no, the procedure is finished in a step S14. If yes, the requested type of acknowledgement message is determined in a further step S12, where after the corresponding type of acknowledgement message is transmitted back to the transmitting device in a further step S13. There after, the procedure finishes in step S14.

The acknowledgement message can be delivered via a communication system, such as the SMS service of the GSM system back to the transmitting device. Hereby, a user requesting the acknowledgement message can be charged for the users. In this case, all users, i.e. all transmitting and receiving devices will need to be registered at a service provider who will than do the mapping from the mapping from the device identification system to the respective addresses of the receiving devices.

Another possibility to send an acknowledgement message back to a transmitting device without using any other intermediate communication system is to use flooding over a standard radio channel. In this case, the message can be propagated a number of times by all notes that receive the message thus allowing to bridge a lager distance to ensure that the acknowledgement message is actually received by the original sender.

In order to ensure that only a certain device receives a message a handshake procedure between the transmitting device and the receiving device can also be established. Within the scenario, the message transmission according to the present invention is only used for initialisation for communication. The transmitting and receiving device could then establish a handshake either via the same communication system as was used for transmitting the original message or by any other communication systems and check if they want to start a communication session or not. For example, the communication could be established by pointing the transmitting device according to the present invention to the receiving device and by sending a device identification as a message. The receiving device then recognises the transmitter on a basis of the device identification and the communication could then be done via a standard nearby communication system. In this scenario, the message system according to the present invention is only needed to establish a first contact.

Different business models could be established on the basis of the message system according to the present invention's centralised approach as described in relation to Fig. 4. A pay per message system could be implemented, in which the transmission of the message costs a certain amount of money. This is similar to the business model of a SMS system. A prepayment business model could be used, in which the transmitting device can be charged with a certain number of messages. After this certain prepaid number of messages have been transmitted, the transmitting device has to be recharged. Alternatively, a prepaid system on a time basis could be established, in which certain time periods are bart during which the transmitting device according to the present invention is activated and can be used independent of the number of messages transmitted. It might also be interesting to mix the business models, and to allow sending of simple messages for free and to charge the transmission of more sophisticated message formats.

From the above it comes clear that the present invention provides a very simple and intuitive way of transmitting messages from a user to another person or another device by using a mobile transmitting device as described above and claimed in the claims. The transmitting device of the present invention is easy to use and simple. The way of addressing is very simple and intuitive. Further, the described functionalities can be easily integrated into any kind of mobile devices.

Various extensions of the new messaging system can be implemented. For example, when additionally a nearby device interaction is used for the communication, the mobile transmitting device according to the present invention could be used to implement some kind of can-phones, i.e. two cans connected by twine. Due to the use of the beam antenna the transmission range can be increased in some kind of a secure communication can be enabled. Further, the messages received and displayed on a receiving device can be filtered and sorted according to rules derived from the local context of the device. For example, a user deleted or refused to last ten messages from a certain person, further transmissions of the transmitting device from this specific person could be blocked. Also, the message could be encrypted before the transmission. Only certain and specific receivers then have the possibility to decipher the message and read it. The keys necessary for the decryption could either be exchanged with a first message or could be provided more sophisticated means, such as a personal contact, or a direct physical transmission between a transmitting device and a receiving device. Also, extended management functions could be introduced in the transmitting devices. Hereby, certain devices could be provided with special permissions and the usage of other devices could be restricted. It could also be possible to disable the devices that have been misused, stolen, etc.

## Claims

1. Mobile transmitting device for transmitting messages to a receiving device on the basis of a wireless communication system, said transmitting device being adapted to be pointed to said receiving device in order to transmit a message, with
providing means for providing a message to be transmitted,
control means (41) for causing the transmission of a message provided by said providing means upon receipt of a transmit signal, and
transmitting means (22) for transmitting the message to said receiving device in the wireless communication system on the basis of the direction in which the transmitting device is pointed
**characterized by**
a direction determination means (42; 73; 83) for determining the direction into which the transmitting device is pointed, and a location determination means (42; 73; 83) for determining the location of the transmitting device, whereby the determined direction and location together with said message are transmitted by the transmitting device to a server device and said message is to be further transmitted by said server device to the receiving device to which the transmitting device had been pointed.

2. Mobile transmitting device according to claim 1,
**characterized by**
a receiving means for receiving messages via the wireless communication system, said receiving means comprising a multidirectional antenna (24) for receiving messages from different directions.

3. Mobile transmitting device according to claim 2,
**characterized in,**
**that** said control means (61), after receipt of a message from a server device via the wireless communication system, causes the transmission of an acknowledgment message to the transmitting device via the server device in the wireless communication system.

4. Mobile transmitting device according to claim 1, 2 or 3,
**characterized by**
an input means (4; 84) for inputting messages to be transmitted to a receiving device.

5. Mobile transmitting device according to any one of the above claims,
**characterized by**
a memory means (3) for storing messages to be transmitted to a receiving device.

## Patentansprüche

1. Mobile Übertragungsvorrichtung zum Übertragen von Nachrichten an eine Empfangsvorrichtung auf Basis eines drahtlosen Kommunikationssystems, wobei die Übertragungsvorrichtung eingerichtet ist, auf die Empfangsvorrichtung gerichtet zu werden, um eine Nachricht zu übertragen, mit
einer Bereitstellungseinrichtung zum Bereitstellen einer zu übertragenden Nachricht,
einer Steuereinrichtung (41), die Übertragung einer Nachricht, welche durch die Bereitstellungseinrichtung bereitgestellt wird, bei Empfang eines Übertragungssignals zu veranlassen, und
einer Übertragungseinrichtung (22) zum Übertragen der Nachricht zur Empfangsvorrichtung im drahtlosen Kommunikationssystem auf Basis der Richtung, in welche die Übertragungsvorrichtung gerichtet wird,
**gekennzeichnet durch**
eine Richtungsbestimmungseinrichtung (42, 73; 83) zum Bestimmen der Richtung, in welcher die Übertragungsvorrichtung gerichtet wird, und eine Lagebestimmungseinrichtung (42, 73; 83) zum Bestimmen der Lage der Übertragungsvorrichtung, wodurch die bestimmte Richtung und die Lage zusammen mit der Nachricht **durch** die Übertragungsvorrichtung zu einer Servervorrichtung übertragen werden, und die Nachricht weiter **durch** die Servervorrichtung zur Empfangsvorrichtung zu übertragen ist, auf welche die Übertragungsvorrichtung gerichtet wurde.

2. Mobile Übertragungsvorrichtung nach Anspruch 1,
**gekennzeichnet durch**
eine Empfangseinrichtung zum Empfangen von Nachrichten über das drahtlose Kommunikationssystem, wobei die Empfangeinrichtung eine Mehrfach-Richtantenne (24) umfasst, um Nachrichten von verschiedenen Richtungen zu empfangen.

3. Mobile Übertragungsvorrichtung nach Anspruch 2,
**dadurch gekennzeichnet, dass**
die Steuereinrichtung (61) - nach Empfang einer Nachricht von einer Servervorrichtung über das drahtlose Kommunikationssystem - die Übertragung einer Anerkenntnisnachricht zur Übertragungsvorrichtung über die Servervorrichtung im drahtlosen Kommunikationssystem veranlasst.

4. Mobile Übertragungsvorrichtung nach Anspruch 1, 2 oder 3,
**gekennzeichnet durch**
eine Eingabeeinrichtung (4; 84) zum Eingeben von Nachrichten, welche zu einer Empfangsvorrichtung zu übertragen sind.

5. Mobile Übertragungsvorrichtung nach einem der obigen Ansprüche,
**gekennzeichnet durch**
eine Speichereinrichtung (3) zum Speichern von Nachrichten, welche zu einer Empfangsvorrichtung zu übertragen sind.

## Revendications

1. Dispositif mobile d'émission destiné à transmettre des messages à un dispositif de réception sur la base d'un système de télécommunications sans fil, ledit dispositif d'émission étant apte à être pointé vers ledit dispositif de réception afin de transmettre un message, comprenant :
un moyen de délivrance destiné à délivrer un message à émettre ;
un moyen (41) de commande destiné à provoquer, à la réception d'un signal d'émission, l'émission d'un message délivré par ledit moyen de délivrance ; et
un moyen (22) d'émission destiné à émettre le message vers ledit dispositif de réception dans le système de télécommunications sans fil sur la base de la direction dans laquelle est pointé le dispositif d'émission,
**caractérisé par** un moyen (42 ; 73 ; 83) de détermination de direction destiné à déterminer la direction dans laquelle est pointé le dispositif d'émission, et par un moyen (42 ; 73 ; 83) de détermination de localisation destiné à déterminer la localisation du dispositif d'émission, la direction et la localisation déterminées étant ainsi transmises, conjointement avec ledit message, par le dispositif d'émission à un dispositif serveur et ledit message étant en outre destiné à être transmis par ledit dispositif serveur au dispositif de réception vers lequel a été pointé le dispositif d'émission.

2. Dispositif mobile d'émission selon la revendication 1, **caractérisé par** un moyen de réception destiné à recevoir des messages via le système de télécommunications sans fil, ledit moyen de réception comprenant une antenne multidirectionnelle (24) destinée à recevoir des messages provenant de directions différentes.

3. Dispositif mobile d'émission selon la revendication 2, **caractérisé en ce que** ledit moyen (61) de commande, après réception d'un message provenant d'un dispositif serveur via le système de télécommunications sans fil, provoque la transmission, au dispositif d'émission, d'un message d'accusé de réception via le dispositif serveur dans le système de télécommunications sans fil.

4. Dispositif mobile d'émission selon la revendication 1, 2 ou 3, **caractérisé par** un moyen (4 ; 84) d'entrée destiné à entrer des messages à transmettre à un dispositif de réception.

5. Dispositif mobile d'émission selon l'une quelconque des revendications ci-dessus, **caractérisé par** un moyen (3) de mémorisation destiné à mémoriser des messages à transmettre à un dispositif de réception.
